# EUROPÄISCHE PATENTSCHRIFT

(11) **EP 2 073 087 B1**
(45) Veröffentlichungstag und Bekanntmachung des Hinweises auf die Patenterteilung: **02.03.2011**
(21) Anmeldenummer: 08021889.4
(22) Anmeldetag: 17.12.2008
(51) Int. Cl.: G05B 19/418, G05B 19/408, G05B 19/414, H04L 12/403

(54) **Verfahren zur Übertragung von Multiturn-Modulo-Leitachsdaten**
Method for transmitting multi-turn module lead axle files
Procédé de transmission de données d'axe directeur modulaire multi-tours

(30) Priorität: 21.12.2007 DE 102007062333
(43) Veröffentlichungstag der Anmeldung: 24.06.2009
(73) Patentinhaber: Robert Bosch GmbH, 70469 Stuttgart (DE)
(72) Erfinder: Schultze, Stephan, 97816 Lohr am Main (DE)
(74) Vertreter: Thürer, Andreas

(56) Entgegenhaltungen:
- EP-B- 1 370 916
- DE-A1- 19 816 189
- DE-B3-102005 061 029

## Beschreibung

### Beschreibung

Die vorliegende Erfindung betrifft ein Verfahren zur Übertragung von Multiturn-Modulo-Leitachsdaten, einen entsprechenden Teilnehmer eines Kommunikationssystems, ein entsprechendes Computerprogramm sowie ein entsprechendes Computerprogrammprodukt.

### Stand der Technik

Automationsaufgaben von wellenlosen Maschinen werden meist mit Hilfe einer sog. Leitachse gelöst. Eine Leitachse stellt üblicherweise eine Winkelpositions- oder Geschwindigkeitsinformation als Referenz bereit, die den Takt der Maschine repräsentiert. Die Leitachsposition ist der Position einer Königswelle nachempfunden.

Die Leitachsinformation wird üblicherweise in einer Steuerung gerechnet und verteilt (sog. virtuelle Leitachse), sie kann jedoch auch ihre Quelle in einem mechanisch montierten Positionsgeber, einem sog. Leitachsgeber haben (sog. reale Leitachse). Die Leitachsposition wird sowohl an Antriebe, als auch an weitere Steuerungen übertragen.

Zur Ausgestaltung dieser Kommunikation existieren im Bereich der Feldbusse viele bekannte Lösungen, wie z.B. Profibus, Profinet, CIPmotion, CAN-Bus, SERCOS interface usw. Die Leitachsinformation wird dabei z.B. als Zahlenwert über das Kommunikationssystem an die Empfänger übertragen, bei denen es sich sowohl um Aktoren (Antriebe) als auch Steuerungen, die evtl. wiederum die Information an angeschlossene Aktoren weitergeben, handeln kann. Die Übertragung der Leitachsposition von der Steuerung zu den jeweiligen Empfängern muss synchron erfolgen, damit die jeweiligen Bearbeitungsschritte zeitgenau ablaufen.

Sogenannte Modulo-Achsen sind endlos bewegende Achsen, d.h. deren Position ist in ihrem Wert nicht begrenzt. Im Gegensatz dazu besitzen Absolut-Achsen einen endlichen Positionsbereich innerhalb dessen sie verfahren. Die Positionsdarstellung von Modulo-Achsen wird dabei mit einem Überlauf versehen, dem sogenannten Modulo-Wert.

Bei einer Modulo-Leitachse springt die Leitachsposition nach einem Durchlauf bzw. Takt zurück und beginnt wieder von neuem, wobei beispielsweise die Position 360° der Position 0° entspricht. Die Empfänger der Leitachsposition müssen nun den sogenannten Modulo-Wert der Leitachse, im obigen Beispiel 360°, kennen, um den Positionssprung, den sog. Modulo-Überlauf, verarbeiten zu können.

Wird pro Leitachsumlauf bzw. Leitachsumdrehung immer ein Bearbeitungsvorgang bzw. Bearbeitungstakt, bspw. eine Umdrehung einer Druckwalze, ausgeführt, bezeichnet man dies als Singleturn-Leitachse. Eine Multiturn-Lösung ist immer dann bevorzugt, wenn ein Bearbeitungsvorgang einer Bearbeitungseinrichtung mehrere Leitachsumläufe umfassen soll. Dies kann z.B. bei einem herstellenden und verpackenden Maschinenmodul der Fall sein, bei dem ein Einzelprodukt pro Leitachsumlauf hergestellt wird, in einer weiteren Station jedoch mehrere Einzelprodukte zu einer Einheit verpackt werden. Der Bearbeitungstakt der Verpackungsmaschine umfasst somit mehrere Umläufe bzw. Umdrehungen der Leitachse.

Es ist bekannt, zum Betrieb derartiger Maschinenkonfigurationen neben der Leitachsposition auch einen Leitachsumdrehungszählwert zu übertragen. Ein entsprechendes Übertragungsverfahren ist beispielsweise unter dem Namen CIPmotion bekannt. Bei diesem Übertragungsverfahren werden synchron Informationen betreffend die Leitachsposition zusammen mit Informationen betreffend den Modulo-Wert der (einzigen) Leitachse übertragen. Darüber hinaus wird ein Umdrehungs-. zähler der Leitachse übertragen. Dieser Umdrehungszähler besitzt jedoch keinen einstellbaren Modulo-Wert, sondern sein Modulo-Überlauf findet an der Zahlengrenze (z.B. 32 bit) statt. Es ist daher relativ aufwändig, eine Multiturn-Anwendung für Bearbeitungsvorgänge, welche eine unterschiedliche Anzahl von Leitachsumdrehungen umfassen, unter Verwendung von CIPmotion zu implementieren.

Eine anderes System zur Übertragung von Multiturn-Leitachsinformationen ist unter dem Namen SYNAX bekannt, wobei zur Übertragung ein Übertragungsverfahren nach dem Standard "SERCOS interface" verwendet wird. Bei einem SYNAX-System werden unterschiedliche Modulo-Werte für die angeschlossenen Einrichtungen unterstützt, wobei die erzeugte und zu übertragende Leitachsposition mehrere Umläufe umfassen kann (z.B. 0° bis 720°). Es ist vorgesehen, für unterschiedliche Empfänger unterschiedliche Leitachsen zu generieren. Bei dem oben genannten Beispiel würde dem herstellenden Maschinenmodul ein Modulo-Wert von 360° parametriert sowie eine Leitachsposition von 0° bis 360° übertragen, wohingegen dem verpackenden Maschinenmodul beispielsweise ein Modulo-Wert von N x 360° parametriert sowie eine Leitachsposition von 0° bis N x 360° übertragen werden würde, um N Einzelprodukte in ein Gebinde zu verpacken. Es ist bekannt, N als sog. Leitachszyklus zu übertragen.

Bei dem in SYNAX genutzten Übertragungsverfahren wird ein Übertragungskanal für eine zyklische, echtzeitfähige Datenübertragung sowie ein Übertragungskanal für eine azyklische Datenübertragung bereitgestellt. Mittels der zyklischen Datenübertragung wird nur die Leitachsposition zeitecht übertragen. Ist eine Änderung des Multiturn-Modulo-Werts nötig, wird die betreffende Information getrennt von der Leitachsposition entweder in dem azyklischen Kanal oder mittels einer Multiplex-Übertragung in dem zyklischen Kanal übertragen. Der Zeitpunkt der Übertragung ist daher nicht sicher bekannt, d.h. die Informationen Leitachsposition und zugehöriger (Multiturn-)Modulo-Wert sind nicht gesichert konsistent in den Empfängern vorhanden. Es ist daher üblich, die Produktion anzuhalten, den neuen Multiturn-Modulo-Wert an die entsprechenden Empfänger zu übertragen, die Leitachsposition ggf. zu korrigieren und erst danach die Produktion wieder zu starten. Dies ist mit einem entsprechenden Zeitverlust verbunden. Weiterhin entsteht durch das Abbremsen und erneute Beschleunigen der Bearbeitungseinrichtungen üblicherweise Makulatur. Oftmals ist es auch notwendig, die Empfänger zu deaktivieren (z.B. durch Entzug einer Antriebsfreigabe). Dies führt je nach Bearbeitungsprozess zu Störungen wie z.B. zu einer Entspannung einer gedehnten Bahn und damit wiederum zu Störungen beim Wiederanlauf.

Ein Beispiel eines Übertragungsverfahrens, bei dem die Kommunikation zwischen den Teilnehmern in Übertragungszyklen erfolgt, wobei_jeder Übertragungszyklus wenigstens einen ersten Bereich zur Übertragung von echtzeitkritischen Daten und wenigstens einen zweiten Bereich zur Übertragung von nichtechtzeitkritischen Daten aufweist, ist in der EP 1 370 916 B1 offenbart. Ein derartiges Kommunikationssystem ist beispielsweise für Automatisierungsaufgaben besonders geeignet und kann prinzipiell als Feldbus ausgestaltet sein.

Es ist daher Aufgabe der vorliegenden Erfindung, ein verbessertes Verfahren zur Übertragung von Multiturn-Modulo-Leitachsinformationen anzugeben.

Diese Aufgabe wird gelöst durch ein Verfahren zur Übertragung von Multiturn-Modulo-Leitachsdaten, einen entsprechenden Teilnehmer eines Kommunikationssystems, ein entsprechendes Computerprogramm sowie ein entsprechendes Computerprogrammprodukt mit den Merkmalen der unabhängigen Patentansprüche. Vorteilhafte Weiterbildungen sind Gegenstand der Unteransprüche sowie der nachfolgenden Beschreibung.

### Vorteile der Erfindung

Zusammen mit der Leitachsposition im Multiturn-Format wird der zugehörige Multiturn-Modulo-Wert gleichzeitig in einem Datentelegramm übertragen. Dadurch ergibt sich automatisch eine Datenkonsistenz aus Multiturn-Leitachsposition und zugehörigem Multiturn-Modulo-Wert. Die Konsistenz muss nicht mittels aufwändiger Mechanismen sichergestellt werden. Es versteht sich, dass der Multiturn-Modulo-Wert auch als Modulo-Umdrehungszähler zur Multiplikation mit einem einzelnen Leitachsumlauf ausgebildet sein kann.

Ein erfindungsgemäßer Teilnehmer eines Kommunikationssystems ist dazu eingerichtet, ein erfindungsgemäßes Verfahren auszuführen und weist die dazu notwendigen Mittel auf.

Es ist bevorzugt, wenn ein Teilnehmer den in dem Datentelegramm übertragenen Leitachsmodulo-Wert überwacht und bei einer festgestellten Veränderung des Leitachsmodulo-Werts eine Anpassung seiner Achsposition anhand des Leitachsmodulo-Werts und des vorherigen Leitachsmodulo-werts durchführt. Damit wird die Möglichkeit geschaffen, Teilnehmer während der laufenden Produktion umzuparametrieren, da diese selbständig eine Veränderung des Modulo-Werts erkennen und ihre Achs- bzw.
Antriebsposition entsprechend korrigieren, um mit dem auf den neuen Modulo-Wert bezogenen Leitachspositionswert weiterarbeiten zu können.

Vorteilhafterweise wird der Leitachspositionswert zusammen mit dem zugehörigen Leitachsmodulo-Wert in einem Datentelegramm in dem wenigstens einen Echtzeitdatenübertragungskanal übertragen. Gleichzeitig mit der Übertragung der Leitachsposition im Multiturn-Format wird der Multiturn-Modulo-Wert (bzw. ein korrespondierender Zahlenwert wie z.B. ein Modulo-Umdrehungszähler) übertragen. Es ergibt sich automatisch eine Datenkonsistenz aus Multiturn-Leitachsposition und korrespondierendem Multiturn-Modulo-Wert der Leitachse. Die Konsistenz muss nicht mittels aufwändiger Mechanismen sichergestellt werden.

Zweckmäßigerweise wird wenigstens ein Nicht-Echtzeit-Datenübertragungskanal zwischen den Teilnehmern in dem Kommunikationssystem bereitgestellt, wobei der wenigstens eine Leitachspositionswert zusammen mit dem zugehörigen Leitachsmodulo-Wert in dem wenigstens einen Nicht-Echtzeit-Datenübertragungskanal übertragen wird. Eine Änderung des Multiturn-Modulo-Werts für einen bestimmten Teilnehmer kann vorteilhafterweise mittels eines definierten Ablaufs über einen Nicht-Echtzeit-Kanal ausgeführt werden. Hierbei wird neben dem neuen Multiturn-Modulo-Wert auch eine ggf. veränderte Leitachsposition übertragen. Durch den definierten Ablauf wird sichergestellt, dass der Multiturn-Modulo-Wert und der interne Leitachspositions-Istwert als konsistentes Datenpaar gleichzeitig wirksam werden und von dem Teilnehmer korrekt verarbeitet werden können, da die Änderung des Multiturn-Modulo-Wertes und die ggf. erforderliche Anpassung der Leitachsposition gleichzeitig stattfindet.

Alternativ kann die Umstellung mittels eines Kommandos erfolgen, das eine Änderung ankündigt, wobei in der Folge vorzugsweise ggf. vorhandene Überwachungen bzw. Berechnungen im Teilnehmer abgeschaltet werden. Nach dem Kommando werden Multiturn-Modulo-Wert und Leitachsposition übertragen. Bei Beendigung des Kommandos springt der Teilnehmer auf die neuen Werte auf und aktiviert die Überwachungen bzw. Berechnungen wieder.

Gemäß einer bevorzugten Ausgestaltung wird für das Kommunikationssystem eine Datenübertragung nach dem Standard "SERCOS interface", insbesondere gemäß "SERCOS III", verwendet. Als Kommunikationssystem kann insbesondere ein SYNAX-Verbund dienen. Bspw. können in SYNAX 200 bis zu zwei Leitachsen pro Motion-Control-Steuerung berechnet werden. Einzelne Maschinenmodule oder komplette Maschineneinheiten lassen sich darüber einfach und übersichtlich in verkettete und synchronisierte Produktionsprozesse integrieren. Die kaskadierbaren Multiturn-Leitachsen werden den Servoantrieben als Positionssollwerte in digitaler Genauigkeit übertragen. SERCOS interface als Antriebsbus (IEC 61491/EN 61491) sichert die störungsfreie Übertragung an die Einzelantriebe der Maschineneinheiten. Sercos interface definiert eine zyklische, synchrone und äquidistante Daten-Kommunikation zwischen einem Kommunikations-Master (typisch: NC-Steuerung) und mehreren Kommunikations-Slaves (typisch: Antriebe oder dezentrale E/A-Stationen). Die dabei zyklisch vom Master zu den Slaves gesendeten Daten sind im Masterdatentelegramm (MDT) und in einem (Sercos III) oder mehreren (Sercos II) Antriebsdatentelegrammen (AT) enthalten, wobei erfindungsgemäß der wenigstens eine Leitachspositionswert zusammen mit dem zugehörigen Leitachsmodulo-Wert in einem Datentelegramm übertragen wird.

Die Erfindung betrifft zudem ein Computerprogramm mit Programmcodemitteln, die geeignet sind, ein erfindungsgemäßes Verfahren auszuführen, wenn das Computerprogramm auf einem Computer oder einer entsprechenden Recheneinheit, insbesondere einem erfindungsgemäßen Teilnehmer eines Kommunikationssystem, ausgeführt wird.

Das erfindungsgemäß vorgesehene Computerprogrammprodukt umfasst auf einem computerlesbaren Datenträger gespeicherte Programmcodemittel, die geeignet sind, ein erfindungsgemäßes Verfahren auszuführen, wenn das Computerprogramm auf einem Computer oder einer entsprechenden Recheneinheit, insbesondere einem erfindungsgemäßen Teilnehmer eines Kommunikationssystem, ausgeführt wird. Geeignete Datenträger sind insbesondere Disketten, Festplatten, Flash-Speicher, EEPROMs, CD-ROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im folgenden unter Bezugnahme auf die Zeichnung ausführlich beschrieben.

### Figurenbeschreibung

- Figur 1: zeigt eine schematische Darstellung einer Übertra- gung von Multiturn-Modulo-Leitachsdaten gemäß dem Stand der Technik;
- Figur 2: zeigt eine erste Ausführungsform einer erfindungs- gemäßen Übertragung von Multiturn-Modulo-Leitachs- daten; und
- Figur 3: zeigt eine zweite Ausführungsform einer erfindungsgemäßen Übertragung von Multiturn-Mo- dulo-Leitachsdaten.

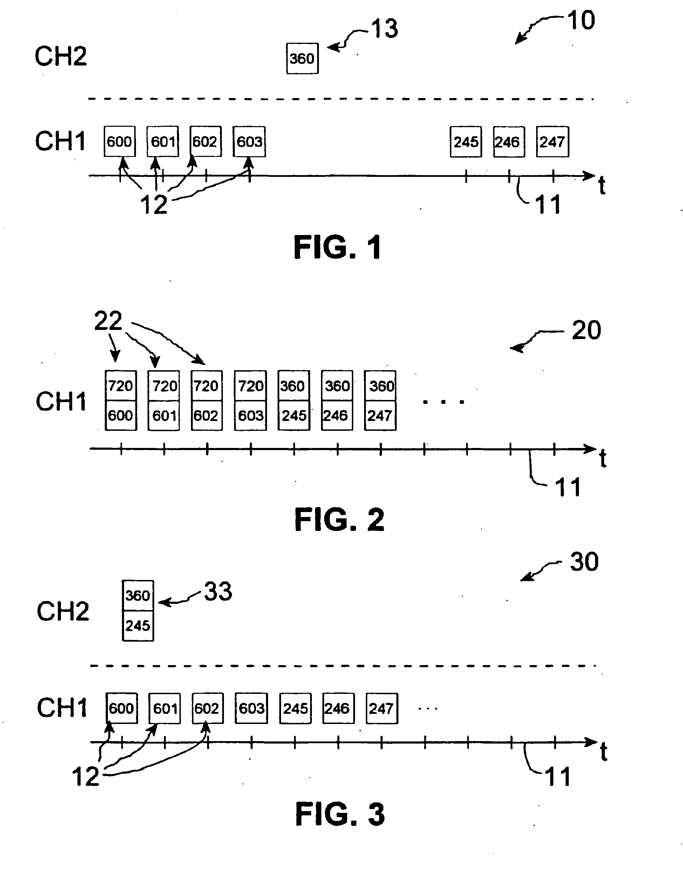

In den Figuren 1 bis 3 werden eine Möglichkeit aus dem Stand der Technik sowie zwei erfindungsgemäße Möglichkeiten beschrieben, einen anfänglich auf 720° parametrierten Leitachsmodulo-Wert in 360° zu ändern und die Leitachsposition entsprechend zu korrigieren. Die Änderung soll nach der Leitachsposition 604° erfolgen.

In Figur 1 ist eine schematische Darstellung einer entsprechenden Leitachsdatenübertragung im Stand der Technik dargestellt. Die dargestellte Übertragung kann unter Verwendung des Standards "SERCOS interface" bei einem SYNAX-Verbund erfolgen. In einem Diagramm 10 ist eine Zeit t auf einer x-Achse 11 aufgetragen. In dem Diagramm sind weiterhin ein mit CH1 bezeichneter ersten Datenübertragungskanal sowie ein mit CH2 bezeichneter zweiter Datenübertragungskanal abgebildet. Der Datenübertragungskanal CH1 ist als Echtzeit-Datenübertragungskanal ausgebildet, der Datenübertragungskanal CH2 ist als Nicht-Echtzeit-Datenübertragungskanal ausgebildet. In dem Echtzeit-Datenübertragungskanal CH1 werden zyklisch Datentelegramme 12 umfassend Leitachspositionswerte übertragen. Die zyklische Datenübertragung wird durch die äquidistante Anordnung entlang der x-Achse 11 dargestellt. Zunächst werden mittels der Datentelegramme 11 Leitachspositionswerte von 600° bis 604° zyklisch übertragen.

Zur erwünschten Reparametrierung der entsprechenden Teilnehmer des Kommunikationssystems wird die Produktion nach dem Leitachspositionswert 604° angehalten, d.h. den Empfängern wird die Reglerfreigabe der Achsen entzogen. Danach empfangene Leitachspositionswerte werden von den entsprechenden Empfängern nicht mehr verarbeitet.

Nach dem Anhalten der Produktion wird in dem Nicht-Echtzeit-Datenübertragungskanal CH2 ein Datentelegramm 13 umfassend einen neuen Leitachsmodulo-Wert übertragen. Der neue Leitachsmodulo-Wert beträgt 360°. Da die Übertragung in dem Nicht-Echtzeit-Datenübertragungskanal CH2 nicht gesichert bzw. nicht zeitecht erfolgt, muss eine ausreichende Zeitspanne abgewartet werden, um sicherzustellen, dass das Datentelegramm 13 von allen entsprechenden Teilnehmern des Kommunikationssystems empfangen worden ist. Nachdem das Datentelegramm 13 mit dem neuen Leitachsmodulo-Wert 360° von den entsprechenden Teilnehmern empfangen worden ist, parametrieren diese den Leitachsmodulo-Wert 360°. Dementsprechend wird die Leitachsposition korrigiert, so dass die Übertragung mit dem korrigierten Leitachspositionswert 245° über den Echtzeit-Datenübertragungskanal CH1 nach der notwendigen Wartezeit beginnt. Vor der Übertragung werden die Empfänger durch Setzen der Reglerfreigabe der Achsen wieder aktiviert.

In Figur 2 ist in einem Diagramm 20 eine erste Ausführungsform einer erfindungsgemäßen Übertragung von Multiturn-Modulo-Leitachsdaten dargestellt. Bei der in Figur 2 dargestellten Übertragung werden die Leitachspositionswerte zusammen mit dem jeweils zugehörigen Leitachsmodulo-Wert jeweils in einem Datentelegramm 22 in dem Echtzeit-Datenübertragungskanal CH1 übertragen. Insbesondere werden die Leitachspositionswerte 600° bis 604° mit dem jeweils zugehörigen Leitachsmodulo-Wert 720° übertragen, wobei die Leitachspositionswerte 245° bis 248° nach der Umstellung mit dem jeweils zugehörigen Leitachsmodulo-Wert 360°. übertragen werden. Die Teilnehmer des Kommunikationssystems empfangen somit gleichzeitig einen Leitachspositionswert mit dem zugehörigen Leitachsmodulo-Wert in einem Datentelegramm über den Echtzeit-Datenübertragungskanal. Somit steht zuverlässig zu jedem Zeitpunkt der richtige Leitachspositionswert mit dem richtigen zugehörigen Leitachsmodulo-Wert zur Verfügung, wodurch eine Umparametrierung der Teilnehmer des Kommunikationssystems während der Produktion möglich ist, ohne dass die Produktion angehalten werden müsste.

Jeder zugehörige Teilnehmer erkennt die Veränderung des Leitachsmodulo-Werts von 720° zu 360° und passt automatisch seine Achsposition, bspw. die Winkelstellung einer Druckachse, an den neuen Modulo-Wert an. Dies bedeutet, dass Achspositionen =360° unverändert bestehen bleiben und Achsposition zwischen 360° und 720° um 360° korrigiert werden. In derselben Weise wird auch die Leitachsposition korrigiert, so dass die Übertragung mit dem korrigierten Leitachspositionswert 245° fortgesetzt wird.

In Figur 3 ist eine zweite Ausführungsform der erfindungsgemäßen Übertragung von Multiturn-Modulo-Leitachsdaten in einem Diagramm 30 schematisch dargestellt. Bei der dargestellten Übertragung von Multiturn-Modulo-Leitachsdaten werden während der Produktion die Leitachspositionswerte wiederum in den Datentelegrammen 12 in dem Echtzeit-Datenübertragungskanal CH1 übertragen. Gemäß der dargestellten erfindungsgemäßen Lösung wird zur Reparametrierung der entsprechenden Teilnehmer des Kommunikationssystems der korrigierte Leitachspositionswert 245° zusammen mit dem zugehörigen Leitachsmodulo-Wert 360° in einem Datentelegramm 33 in dem Nicht-Echtzeit-Datenübertragungskanal CH2 übertragen. Die Übertragung des Datentelegramms 33 findet rechtzeitig vor dem erwünschten Umstellungszeitpunkt statt, so dass der Empfang des Datentelegramms 33 in den jeweiligen Teilnehmern des Kommunikationssystems vor dem Umstellungszeitpunkt sichergestellt werden kann.

Die entsprechenden Teilnehmer des Kommunikationssystems entnehmen dem empfangenen Datentelegramm 33 die Information, dass bei Empfangen des Leitachspositionswertes 245° der neue Leitachsmodulo-Wert 360° zu parametrieren ist. Somit wird den entsprechenden Teilnehmern des Kommunikationssystems in dem Echtzeit-Datenübertragungskanal CH1 nach dem Datentelegramm mit dem Leitachspositionswert 604° als nächstes das Datentelegramm mit dem Leitachspositionswert 245° übertragen, wobei die entsprechenden Teilnehmer die gewünschte Umparametrierung durchführen.

Durch die beschriebenen Ausführungsformen der Erfindung wird eine Übertragung von Multiturn-Modulo-Leitachsdaten zwischen Teilnehmern eines Kommunikationssystems bereitgestellt, die es ermöglicht, eine Umparametrierung der Leitachse unter Betriebsbedingungen und ohne Anhalten der Produktion bereitzustellen.

### Bezugszeichenliste

- 10: schematische Darstellung der Datenübertragung im Stand der Technik
- 11: x-Achse t
- 12, 13: Datentelegramm
- 20, 30: schematische Darstellung einer erfindungsge- mäßen Datenübertragung
- 22, 33: Datentelegramm
- CH1: Echtzeit-Datenübertragungskanal
- CH2: Nicht-Echtzeit-Datenübertragungskanal

## Patentansprüche

1. Verfahren zur Übertragung von Multiturn-Modulo-Leitachsdaten umfassend wenigstens einen Leitachspositionswert (600°-604°; 245°-248°) sowie einen zugehörigen Leitachsmodulo-Wert (720°; 360°) in einem Kommunikationssystem umfassend wenigstens zwei Teilnehmer,
wobei wenigstens ein Echtzeit-Datenübertragungskanal (CH1) zur zyklischen Datenübertragung zwischen den Teilnehmern bereitgestellt wird,
**dadurch gekennzeichnet, dass** der wenigstens eine Leitachspositionswert (600°-604°; 245°-248°) zusammen mit dem zugehörigen Leitachsmodulo-Wert (720°; 360°) in einem Datentelegramm (22; 33) übertragen wird.

2. Verfahren nach Anspruch 1, wobei ein Teilnehmer eine Anpassung seiner Achsposition anhand des Leitachsmodulo-Werts (720°) und des vorherigen Leitachsmodulo-Werts (360°) durchführt.

3. Verfahren nach Anspruch 2, wobei der Teilnehmer den in dem Datentelegramm (22; 33) übertragenen Leitachsmodulo-Wert (720°; 360°) überwacht und bei einer festgestellten Veränderung des Leitachsmodulo-Werts (720°) die Anpassung seiner Achsposition anhand des Leitachsmodulo-Werts (720°) und des vorherigen Leitachsmodulo-Werts (360°) durchführt.

4. Verfahren nach Anspruch 2, wobei der Teilnehmer die Anpassung seiner Achsposition anhand eines empfangenen Kommandos durchführt.

5. Verfahren nach Anspruch 4, wobei aufgrund des empfangenen Kommandos interne Überwachungen und/oder Berechnungen des Teilnehmers deaktiviert werden und nach Beendigung des Kommandos interne Überwachungen und/oder Berechnungen des Teilnehmers aktiviert werden.

6. Verfahren nach einem der vorstehenden Ansprüche, wobei der Leitachspositionswert (600°-604°; 245°-248°) zusammen mit dem zugehörigen Leitachsmodulo-Wert (720°; 360°) in einem Datentelegramm (22) in dem wenigstens einen Echtzeit-Datenübertragungskanal (CH1) übertragen wird.

7. Verfahren nach einem der vorstehenden Ansprüche, wobei wenigstens ein Nicht-Echtzeit-Datenübertragungskanal (CH2) wischen den Teilnehmern bereitgestellt wird, wobei der wenigstens eine Leitachspositionswert (245°) zusammen mit dem zugehörigen Leitachsmodulo-Wert (360°) in einem Datentelegramm (33) in dem wenigstens einen Nicht-Echtzeit-Datenübertragungskanal (CH2) übertragen wird.

8. Verfahren nach einem der vorstehenden Ansprüche, wobei das Kommunikationssystem eine Datenübertragung nach dem Standard "SERCOS interface", insbesondere gemäß "SERCOS III", verwendet.

9. Teilnehmer eines Kommunikationssystem, das wenigstens einen Echtzeit-Datenübertragungskanal (CH1) zur zyklischen Datenübertragung zwischen den Teilnehmern bereitstellt, wobei
der Teilnehmer dazu eingerichtet ist, Multiturn-Modulo-Leitachsdaten umfassend wenigstens einen Leitachspositionswert (600°-604°; 245°-248°) sowie einen zugehörigen Leitachsmodulowert (720°, 360°) zu übertragen, **dadurch gekennzeichnet, dass** der Teilnehmer dazu eingerichtet ist, den wenigstens eine Leitachspositionswert (600°-604°; 245°- 248°) zusammen mit dem zugehörigen Leitachsmodulo-Wert (720°; 360°) in einem Datentelegramm (22; 33) zu übertragen.

10. Teilnehmer eines Kommunikationssystem nach Anspruch 9, der dazu eingerichtet ist, den Leitachspositionswert (600°-604°; 245°-248°) zusammen mit dem zugehörigen Leitachsmodulo-Wert (720°; 360°) in einem Datentelegramm (22; 33) in dem wenigstens einen Echtzeit-Datenübertragungskanal (CH1) zu übertragen.

11. Teilnehmer eines Kommunikationssystem nach Anspruch 8 oder 9, wobei das Kommunikationssystem wenigstens einen Nicht-Echtzeit-Datenübertragungskanal (CH2) zwischen den Teilnehmern bereitstellt, wobei der Teilnehmer dazu eingerichtet ist, den wenigstens eine Leitachspositionswert (245°) zusammen mit dem zugehörigen Leitachsmodulo-Wert (360°) in dem wenigstens einen Nicht-Echtzeit-Datenübertragungskanal (CH2) zu übertragen.

12. Teilnehmer eines Kommunikationssystem nach einem der Ansprüche 9 bis 10, wobei das Kommunikationssystem eine Datenübertragung nach dem Standard "SERCOS interface", insbesondere gemäß "SERCOS III", bereitstellt.

13. Computerprogramm mit Programmcodemitteln, die geeignet sind, ein Verfahren nach einem der Ansprüche 1 bis 8 auszuführen, wenn das Computerprogramm auf einem Computer oder einer entsprechenden Recheneinheit, insbesondere einem Teilnehmer eines Kommunikationssystem nach einem der Ansprüche 9 bis 12, ausgeführt wird.

14. Computerprogrammprodukt umfassend auf einem computerlesbaren Datenträger gespeicherte Programmcodemittel, die geeignet sind, ein Verfahren nach einem der Ansprüche 1 bis 8 auszuführen, wenn das Computerprogramm auf einem Computer oder einer entsprechenden Recheneinheit, insbesondere einem Teilnehmer eines Kommunikationssystem nach einem der Ansprüche 9 bis 12, ausgeführt wird.

## Claims

1. Method for transmitting multiturn modulo control axis data comprising at least one control axis position value (600°-604°; 245°-248°) and an associated control axis modulo value (720°; 360°) in a communication system comprising at least two subscribers,
wherein at least one real-time data transmission channel (CH1) is provided for the purpose of cyclic data transmission between the subscribers, **characterized in that** the at least one control axis position value (600°-604°; 245°-248°) is transmitted together with the associated control axis modulo value (720°; 360°) in a data message (22; 33).

2. Method according to Claim 1, wherein a subscriber adjusts its axis position using the control axis modulo value (720°) and the preceding control axis modulo value (360°).

3. Method according to Claim 2, wherein the subscriber monitors the control axis modulo value (720°; 360°) transmitted in the data message (22; 33) and, if a change is established in the control axis modulo value (720°), adjusts its axis position using the control axis modulo value (720°) and the preceding control axis modulo value (360°).

4. Method according to Claim 2, wherein the subscriber adjusts its axis position using a received command.

5. Method according to Claim 4, wherein the received command is taken as a basis for deactivating internal monitoring operations and/or calculation operations by the subscriber and, following termination of the command, for activating internal monitoring operations and/or calculation operations by the subscriber.

6. Method according to one of the preceding claims, wherein the control axis position value (600°-604°; 245°-248°) is transmitted together with the associated control axis modulo value (720°; 360°) in a data message (22) in the at least one real-time data transmission channel (CH1).

7. Method according to one of the preceding claims, wherein at least one non-real-time data transmission channel (CH2) is provided between the subscribers, wherein the at least one control axis position value (245°) is transmitted together with the associated control axis modulo value (360°) in a data message (33) in the at least one non-real-time data transmission channel (CH2).

8. Method according to one of the preceding claims, wherein the communication system uses data transmission based on the "SERCOS interface" standard, particularly based on "SERCOS III".

9. Subscriber in a communication system which provides at least one real-time data transmission channel (CH1) for the purpose of cyclic data transmission between the subscribers, wherein the subscriber is set up to transmit multiturn modulo control axis data comprising at least one control axis position value (600°-604°; 245°-248°) and an associated control axis modulo value (720°; 360°), **characterized in that** the subscriber is set up to transmit the at least one control axis position value (600°-604°; 245°-248°) together with the associated control axis modulo value (720°; 360°) in a data message (22; 33).

10. Subscriber in a communication system according to Claim 9, which is set up to transmit the control axis position value (600°-604°; 245°-248°) together with the associated control axis modulo value (720°; 360°) in a data message (22; 33) in the at least one real-time data transmission channel (CH1).

11. Subscriber in a communication system according to Claim 8 or 9, wherein the communication system provides at least one non-real-time data transmission channel (CH2) between the subscribers, wherein the subscriber is set up to transmit the at least one control axis position value (245°) together with the associated control axis modulo value (360°) in the at least one non-real-time data transmission channel (CH2).

12. Subscriber in a communication system according to one of Claims 9 to 10, wherein the communication system provides data transmission based on the "SERCOS interface" standard, particularly based on "SERCOS III".

13. Computer program having program code means which are suitable for carrying out a method according to one of Claims 1 to 8 when the computer program is executed on a computer or an appropriate computation unit, particularly a subscriber in a communication system according to one of Claims 9 to 12.

14. Computer program product comprising program code means which are stored on a computer-readable data storage medium and which are suitable for carrying out a method according to one of Claims 1 to 8 when the computer program is executed on a computer or an appropriate computation unit, particularly a subscriber in a communication system according to one of Claims 9 to 12.

## Revendications

1. Procédé de transfert de données d'axe pilote modulo multi-tours, comprenant au moins une valeur (600°-604°; 245°-248°) de position d'axe pilote ainsi qu'une valeur associée (720°; 360°) de modulo d'axe pilote dans un système de communication comprenant au moins deux participants,
dans lequel au moins un canal (CH1) de transmission de données en temps réel est prévu pour transférer cycliquement des données entre les participants, **caractérisé en ce que** la ou les valeurs (600°-604°; 245°-248°) de position d'axe pilote sont transmises dans un télégramme de données (22; 33) en même temps que la valeur associée (720°; 360°) de modulo d'axe pilote.

2. Procédé selon la revendication 1, dans lequel un participant exécute une adaptation de sa position d'axe à l'aide de la valeur (720°) de modulo d'axe pilote et de la valeur précédente (360°) de modulo d'axe pilote.

3. Procédé selon la revendication 2, dans lequel le participant surveille la valeur (720°; 360°) de modulo d'axe pilote transmise dans le télégramme de données (22; 33) et, lorsqu'il constate une modification de la valeur (720°) de modulo d'axe pilote, il exécute l'adaptation de sa position d'axe à l'aide de la valeur (720°) de modulo d'axe pilote et de la valeur précédente (360°) de modulo d'axe pilote.

4. Procédé selon la revendication 2, dans lequel le participant exécute l'adaptation de sa position d'axe à l'aide d'une commande qu'il a reçue.

5. Procédé selon la revendication 4, dans lequel sur la base de la commande reçue, des surveillances internes et/ou des calculs effectués par le participant sont désactivés, les surveillances internes et/ou les calculs effectués par le participant étant activés lorsque la commande est terminée.

6. Procédé selon l'une des revendications précédentes, dans lequel la valeur (600°-604°; 245°-248°) de position d'axe pilote est transmise en même temps que la valeur associée (720°; 360°) de modulo d'axe pilote dans un télégramme de données (22) par le ou les canaux (CH1) de transmission de données en temps réel.

7. Procédé selon l'une des revendications précédentes, dans lequel au moins un canal (CH2) de transmission de données non en temps réel est prévu entre les participants, la ou les valeurs (245°) de position d'axe pilote étant transmises dans un télégramme de données (33) en même temps que la valeur associée (360°) de modulo d'axe pilote par le ou les canaux (CH2) de transmission de données non en temps réel.

8. Procédé selon l'une des revendications précédentes, dans lequel le système de communication utilise une transmission de données selon la norme "interface SERCOS", et en particulier selon la norme "SERCOS III".

9. Participant d'un système de communication qui met à disposition au moins un canal (CH1) de transmission de données en temps réel pour la transmission cyclique de données entre les participants, le participant étant conçu pour transmettre des données d'axe pilote modulo multi-tours qui comprennent au moins une valeur (600°-604°; 245°-248°) de position d'axe pilote ainsi qu'une valeur associée (720°; 360°) de modulo d'axe pilote, **caractérisé en ce que** le participant est conçu pour transmettre dans un télégramme de données (22; 33) la ou les valeurs (600°-604°; 245°-248°) de position d'axe pilote en même temps que la valeur associée (720°; 360°) de modulo d'axe pilote.

10. Participant d'un système de communication selon la revendication 9, conçu pour transmettre dans un télégramme de données (22; 33) la valeur (600°-604°; 245°-248°) de position d'axe pilote en même temps que la valeur associée (720°; 360°) de modulo d'axe pilote par le ou les canaux (CH1) de transmission de données en temps réel.

11. Participant d'un système de communication selon les revendications 8 ou 9, dans lequel le système de communication présente au moins un canal (CH2) de transmission de données non en temps réel entre les participants, le participant étant conçu pour transmettre la ou les valeurs (245°) de position d'axe pilote en même temps que la valeur associée (360°) de modulo d'axe pilote sur le ou les canaux (CH2) de transmission de données non en temps réel.

12. Participant d'un système de communication selon l'une des revendications 9 à 10, dans lequel le système de communication permet une transmission de données selon la norme "interface SERCOS" et en particulier selon la norme "SERCOS III".

13. Programme informatique doté de moyens de code de programme qui conviennent pour exécuter un procédé selon l'une des revendications 1 à 8 lorsque le programme informatique est exécuté sur un ordinateur ou une unité de calcul appropriée, en particulier un participant de système de communication selon l'une des revendications 9 à 12.

14. Produit de programme informatique comprenant des moyens de code de programme conservés en mémoire sur un support de données lisibles par ordinateur et qui conviennent pour exécuter un procédé selon l'une des revendications 1 à 8 lorsque le programme informatique est exécuté sur un ordinateur ou une unité de calcul appropriée, en particulier un participant de système de communication selon l'une des revendications 9 à 12.
